# EUROPÄISCHE PATENTSCHRIFT

(11) **EP 2 476 302 B1**
(45) Veröffentlichungstag und Bekanntmachung des Hinweises auf die Patenterteilung: **24.04.2013**
(21) Anmeldenummer: 11189571.0
(22) Anmeldetag: 17.11.2011
(51) Int. Cl.: A01C 7/12

(54) **Dosierrad für eine Dosiereinrichtung zum Dosieren von Saatgut**
Metering wheel for a metering device for dosing seed
Roue de comptage pour un dispositif de dosage destinée au dosage de semences

(30) Priorität: 12.01.2011 DE 102011008358
(43) Veröffentlichungstag der Anmeldung: 18.07.2012
(73) Patentinhaber: Kverneland AS, 4355 Kvernaland (NO)
(72) Erfinder: Falinski, Jürgen, 59494 Soest (DE)
(74) Vertreter: Schweiger, Johannes

(56) Entgegenhaltungen:
- DE-A1-102008 013 162
- DE-U1- 9 300 439
- FR-A1- 2 394 237
- NL-A- 7 001 277

## Beschreibung

Die vorliegende Erfindung betrifft ein Dosierrad für eine Dosiereinrichtung zum Dosieren von Saatgut und/oder Dünger gemäß Patentanspruch 1 sowie eine Dosiereinrichtung zum Dosieren von Saatgut und/oder Dünger gemäß Patentanspruch 9 und eine Verteilmaschine zum Ausbringen von Saatgut und/oder Dünger gemäß Patentanspruch 10.

Dosiergeräte mit gattungsgemäßen Dosierrädern werden bei landwirtschaftlichen Maschinen eingesetzt, um Saatgut und/oder Dünger präzise zu dosieren und anschließend auf landwirtschaftlichen Flächen auszubringen.

Derartige Dosiergeräte mit Dosierrädern sind beispielsweise in der EP 0 094 583 beschrieben. Um den Verlust bei der Förderung des teilweise kostspieligen Saatguts/Düngers zu minimieren, wurde im Stand der Technik versucht, den Förderkanal möglichst dicht auszubilden.

Ein anderer Weg wird bei dem Dosiergerät gemäß der DE 44 11 000 C1 beschrieben, bei dem mittels einer Ausnehmung 8 und eines Ausgabebereichs 9 zwischen dem Zellenrad und der Gehäusewand, in dem dort vorhandenen Spalt, eingeklemmtes Saatgut befreit werden kann. Das Saatgut wird durch das Vorsehen der Ausnehmung und des Ausgabebereichs in den Förderkanal zurückgeführt und ausgegeben.

Ein weiteres Dosiergerät nach dem Oberbegriff des Anspruchs 1 ist aus der NL 700 12 77 bekannt.

Es besteht insbesondere das technische Problem, dass in dem Spalt eingeklemmtes Saatgut durch die Rotation des Dosierrads zerstört wird und damit nicht mehr keimfähig ist und/oder das Dosierrad durch eingeklemmtes Saatgut blockiert oder zumindest abgebremst wird und eine optimale Ausbringung des Saatguts nicht mehr gewährleistet ist.

Aufgabe der vorliegenden Erfindung ist es daher, ein Dosierrad anzugeben, mit welchem weniger Saatgut in der Dosiereinrichtung eingeklemmt wird und eingeklemmtes Saatgut schonend behandelt wird sowie eine Blockierung des Dosierrads minimiert wird.

Diese Aufgabe wird mit den Merkmalen der Patentansprüche 1, 9 und 10 erfüllt. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. Bei angegebenen Wertebereichen sollen auch innerhalb der genannten Grenzen liegende Werte als Grenzwerte offenbart und in beliebiger Kombination beanspruchbar sein.

Der Erfindung liegt der Gedanke zugrunde, die zwischen einer Begrenzungswand der Dosiereinrichtung und dem Dosierrad wirksame Kontaktfläche zu minimieren, indem eine zur Begrenzungswand der Dosiereinrichtung weisende Seitenwand von Förderelementen des Dosierrads mit einer möglichst kleinen parallelen Fläche sowie einem dazu angewinkelten Flächenabschnitt vorzusehen, der mit einem Freiwinkel versehen ist, damit einzelnes Saatgut, welches in dem Spalt zwischen Dosierrad und der Begrenzungswand zu verklemmen droht, möglichst schnell freigegeben werden kann. Das Dosierrad ist insbesondere zur Volumenförderung von Saatgut / Dünger ausgebildet und nicht zur Förderung von einzelnen Saatkörnern.

Gemäß einer vorteilhaften Ausführungsform der Erfindung ist vorgesehen, dass der parallele Wandabschnitt in eine Axialrichtung des Dosierrads um einen Abstand C von der Seitenfläche des Förderelements zurückgesetzt ist. Auf diese Weise kann weitgehend vermieden werden, dass Saatgut zwischen die Seitenfläche des Förderelements und die Begrenzungswand der Dosiereinrichtung gerät und das Förderrad blockiert beziehungsweise das Saatgut zerstört wird oder Saatgut sogar in das Innere des Dosierrads gelangt.

Indem der parallele Wandabschnitt im Wesentlichen fluchtend zur Seitenfläche ausgerichtet ist, kann eine optimale Förderung des Saatguts entlang des Förderkanals der Dosiereinrichtung gewährleistet werden.

In einer weiteren, vorteilhaften Ausführungsform der Erfindung weist der angewinkelte Wandabschnitt eine größere Fläche als der parallele Wandabschnitt auf. Der parallele Wandabschnitt dient zur Abdichtung der Förderelemente gegenüber der Begrenzungswand der Dosiereinrichtung, damit ein gleichmäßiges Fördern des Saatguts und/oder Düngers gewährleistet ist. Der angewinkelte Wandabschnitt dient dazu, etwaiges zwischen dem parallelen Wandabschnitt und der Begrenzungswand eingeklemmtes Saatgut möglichst schnell wieder freizugeben, wobei gleichzeitig eine gewisse Dicke der Förderelemente in Rotationsrichtung vorgesehen sein kann. Andernfalls wäre eine stabile Ausgestaltung der Förderelemente nicht möglich.

Besonders vorteilhaft ist es dabei, wenn der angewinkelte Wandabschnitt in einem Winkel β größer 10 Grad und kleiner 80 Grad, insbesondere größer 15 Grad und kleiner 60 Grad, vorzugsweise größer 20 Grad und kleiner 45 Grad, zu dem parallelen Wandabschnitt verläuft.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: eine erfindungsgemäße Dosiereinrichtung mit einem erfindungsgemäßen Dosierrad in einer schematischen Perspektivansicht und
- Figur 2: eine vergrößerte, schematische Perspektivansicht eines erfindungsgemäßen Dosierrads.

In den Figuren sind gleiche Bauteile und Bauteile mit gleicher Funktion mit den gleichen Bezugszeichen gekennzeichnet.

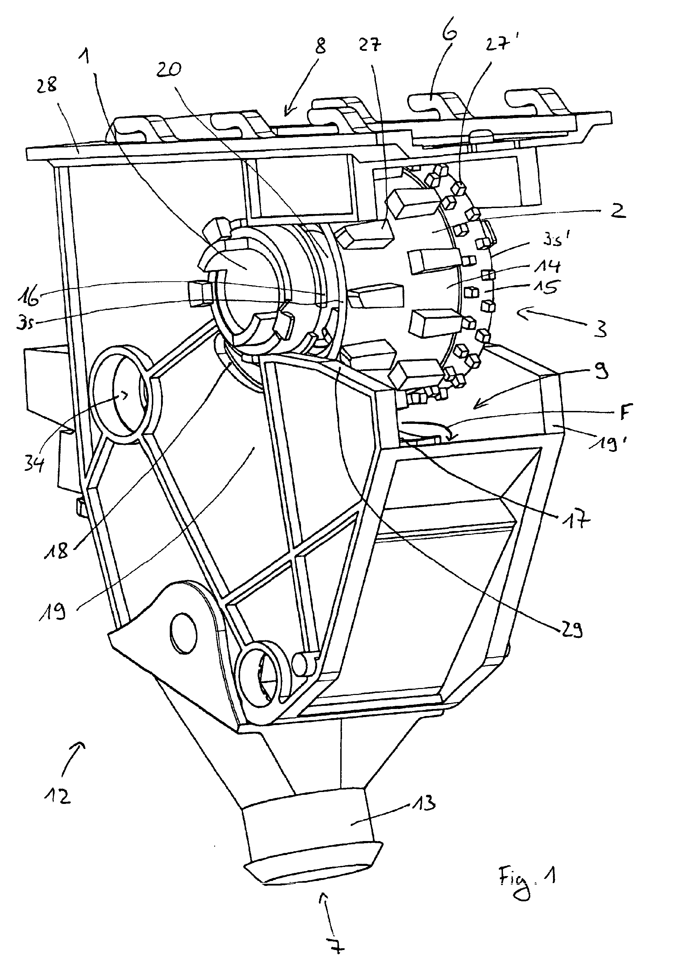

Eine in Figur 1 gezeigte Dosiereinrichtung 12 ist an einen nicht dargestellten Boden eines Saatgutbehälters durch Befestigungsmittel 6 anschließbar, so dass ein Zulauf 8 der Dosiereinrichtung 12 im Bereich einer nicht dargestellten Bodenöffnung des Saatgutbehälters angeordnet ist.

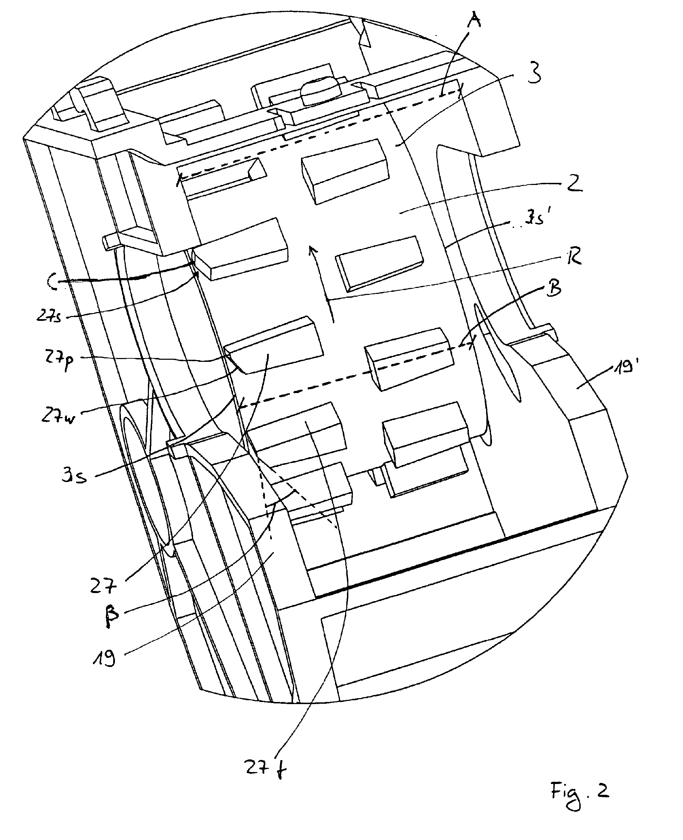

Beim Betrieb der Dosiereinrichtung 12, insbesondere eines Dosierrads 3, wird Saatgut aus dem Saatgutbehälter durch einen Förderkanal 9 von dem Zulauf 8 bis zu einem Dosierabgang 7 gefördert. Die Dosierung und Förderung folgt durch an einem Außenumfang 2 des Dosierrads 3 hervorstehende Förderelemente 27, 27'. Das Dosierrad 3 kann aus einem einzelnen Dosierrad, wie in Figur 2 dargestellt, oder aus einem Normaldosierrad 14 und einem Feindosierrad 15 bestehen, die mittels eines Kupplungsstücks 16 schaltbar sind.

Nach dem Zulauf 8 ist ein Stauraum in dem Förderkanal 9 vorgesehen, der durch das Dosierrad 3, Seitenwände 19, 19' und eine, insbesondere federnd, an dem Dosierrad 3 anliegende Bodenplatte 17 begrenzt ist. Die Bodenklappe 17 ist um eine Lagerachse 34 rotierbar.

Das Dosierrad 3 ist in ein Gehäuse 28 der Dosiereinrichtung 12 über eine verschließbare Aufnahme 29 des Gehäuses 28 aufnehmbar und austauschbar. Das Dosierrad ist während der Rotation um eine Antriebswelle 1 in einer Rotationsrichtung R durch die Seitenwände 19, 19' des Gehäuses 28 gleitend geführt, und zwar entlang von Seitenwänden 3s, 3s' des Dosierrads 3.

Zumindest die in Rotationsrichtung R am Außenumfang 2 entlang der Seitenfläche 3s angeordneten Förderelemente 27 haben an ihrer in Richtung der Begrenzungswand 19 weisenden Seitenwand 27s eine besondere, erfindungsgemäße Ausgestaltung. Die Seitenwand 27s ist in einen parallelen Wandabschnitt 27p und einen angewinkelten Wandabschnitt 27w unterteilt. Der parallele Wandabschnitt 27p ist in Rotationsrichtung R vor dem angewinkelten Wandabschnitt 27w angeordnet. Der parallele Wandabschnitt 27p weist einen rechten Winkel zu einer in Rotationsrichtung R weisenden Förderwand 27f des Förderelements 27 auf.

Der parallele Wandabschnitt 27p ist gegenüber der Seitenfläche 3s zurückgesetzt, und zwar um einen Abstand C. Der Abstand C ist im Verhältnis zu einer Breite B des Dosierrads 3 minimal, insbesondere kleiner als der zwanzigste Teil der Breite B, vorzugsweise kleiner als der dreißigste Teil der Breite B.

Der parallele Wandabschnitt 27p erstreckt sich in Rotationsrichtung R über einen kleineren Bereich des Förderelementes 27 als der angewinkelte Wandabschnitt 27w, insbesondere in einem Verhältnis zwischen 1 zu 10 und 1 zu 1, vorzugsweise zwischen 1 zu 7 und 1 zu 2.

Der angewinkelte Wandabschnitt 27w ist in einem Winkel β zwischen 10 Grad und 80 Grad, insbesondere zwischen 15 Grad und 60 Grad, vorzugsweise zwischen 20 Grad und 45 Grad, zu dem parallelen Wandabschnitt 27p in Rotationsrichtung R angeordnet.

### Bezugszeichenliste

- 1: Antriebswelle
- 2: Außenumfang
- 3,: Dosierrad
- 3s, 3s': Seitenfläche
- 6: Befestigungsmittel
- 7: Dosierabgang
- 8: Zulauf
- 9: Förderkanal
- 12: Dosiereinrichtung
- 13: Auslauf
- 14: Normaldosierrad
- 15: Feindosierrad
- 16: Kupplungsstück
- 17: Bodenklappe
- 18: Reinigungsöffnung
- 19, 19': Seitenwände
- 20: Innenraum
- 27, 27': Förderelemente
- 27f: Förderwand
- 27p: paralleler Wandabschnitt
- 27s: Seitenfläche
- 27w: angewinkelter Wandabschnitt
- 28: Gehäuse
- 29: Aufnahme
- 34: Lagerachse
- A: Abstand
- B: Breite
- C: Abstand
- F: Förderstrecke
- R: Rotationsrichtung
- β: Winkel

## Patentansprüche

1. Dosierrad (3) für eine Dosiereinrichtung (12) zum Dosieren von Saatgut und/oder Dünger mit:
- an seinem Außenumfang (2) angeordneten Förderelementen (27) zur Förderung des Saatguts und/oder Düngers durch Rotation des Dosierrads (3) in einer Rotationsrichtung (R),
- einer an einer Begrenzungswand (19) der Dosiereinrichtung (12) entlang rotierenden Seitenfläche (3s), wobei die Förderelemente (27) eine zur Begrenzungswand (19) weisende Seitenwand (27s) aufweisen, **dadurch gekennzeichnet, dass** die Seitenwand (27s) einen zur Seitenfläche (3s) parallelen Wandabschnitt (27p) und einen zur Seitenfläche (27s) angewinkelten Wandabschnitt (27w) aufweist.

2. Dosierrad nach Anspruch 1, wobei der parallele Wandabschnitt (27p) in Rotationsrichtung R vor dem angewinkelten Wandabschnitt (27w) angeordnet ist

3. Dosierrad nach Anspruch 1, wobei der angewinkelte Wandabschnitt (27w) zur Minimierung der wirksamen Kontaktfläche zwischen der Begrenzungswand (19) und dem Dosierrad (3) ausgebildet ist.

4. Dosierrad nach Anspruch 1, wobei der parallele Wandabschnitt (27p) zur Abdichtung der Förderelemente (27) gegenüber der Begrenzungswand (19) dient, um ein gleichmäßiges Fördern des Saatgutes und/oder Düngers zu gewährleisten.

5. Dosierrad nach einem der vorhergehenden Ansprüche, bei dem der parallele Wandabschnitt (27p) in einer Axialrichtung des Dosierrads um einen Abstand C von der Seitenfläche (3s) zurückgesetzt ist.

6. Dosierrad nach einem der vorhergehenden Ansprüche, bei dem der parallele Wandabschnitt (27p) im Wesentlichen fluchtend zur Seitenfläche (3s) angeordnet ist.

7. Dosierrad nach einem der vorhergehenden Ansprüche, bei dem der angewinkelte Wandabschnitt (27w) eine größere Fläche als der parallele Wandabschnitt (27p) aufweist.

8. Dosierrad nach einem der vorhergehenden Ansprüche, bei dem der angewinkelte Wandabschnitt (27w) in einem Winkel β > 10 Grad und < 80 Grad, insbesondere > 15 Grad und < 60 Grad, vorzugsweise > 20 Grad und < 45 Grad, zu dem parallelen Wandabschnitt (27p) verläuft.

9. Dosiereinrichtung zum Dosieren von Saatgut und/oder Dünger mit einem Dosierrad (3) gemäß einem der vorhergehenden Ansprüche.

10. Verteilmaschine zum Ausbringen von Saatgut und/oder Dünger mit einer Dosiereinrichtung (12) nach Anspruch 9.

## Claims

1. A proportioning wheel (3) for a proportioning apparatus (12) for proportioning of seed and/or fertilizer with the following:
- conveyor elements (27) located on its outer periphery (2) for conveyance of the seed and/or fertilizer by rotation of the proportioning wheel (3) in one direction (R) of rotation,
- a side surface (3s) which rotates along one boundary wall (19) of the proportioning apparatus (12), the conveyor elements (27) having one side wall (27s) which points to the boundary wall (19), **characterized in that** the side wall (27s) has one wall section (27p) which is parallel to the side surface (3s) and one wall section (27w) which is angled to the side surface (27s).

2. The proportioning wheel as claimed in Claim 1, wherein the parallel wall section (27p) is located in the direction R of rotation in front of the angled wall section (27w).

3. The proportioning wheel as claimed in Claim 1, wherein the angled wall section (27w) is made to minimize the effective contact surface between the boundary wall (19) and the proportioning wheel (3).

4. The proportioning wheel as claimed in Claim 1, wherein the parallel wall section (27p) is used to seal the conveyor elements (27) relative to the boundary wall (19) in order to ensure a uniform conveyance of the seed and/or fertilizer.

5. The proportioning wheel as claimed in one of the preceding claims, in which the parallel wall section (27p) is set back in an axial direction of the proportioning wheel by a distance C from the side surface (3s).

6. The proportioning wheel as claimed in one of the preceding claims, in which the parallel wall section (27p) is located essentially flush with the side surface (3s).

7. The proportioning wheel as claimed in one of the preceding claims, in which the angled wall section (27w) has a larger area than the parallel wall section (27p).

8. The proportioning wheel as claimed in one of the preceding claims, in which the angled wall section (27w) runs at an angle β > 10 degrees and < 80 degrees, especially > 15 degrees and < 60 degrees, preferably > 20 degrees and < 45 degrees, to the parallel wall section (27p).

9. A proportioning apparatus for proportioning of seed and/or fertilizer with a proportioning wheel (3) as claimed in one of the preceding claims.

10. Spreading machine for delivery of seed and/or fertilizer with a proportioning apparatus (12) as claimed in Claim 9.

## Revendications

1. Doseur (3) destiné à un dispositif de dosage (12) pour doser des semences et/ou engrais comportant :
- des éléments de transport (27) disposés sur sa circonférence extérieure (2) afin de transporter les semences et/ou engrais par rotation du doseur (3) dans une direction de rotation (R),
- une surface latérale (3s) entrant en rotation le long du dispositif de dosage (12) sur une paroi de délimitation (19), dans lequel les éléments de transport (27) présentent une paroi latérale (27s) tournée vers la paroi de délimitation (19), **caractérisé en ce que** la paroi latérale (27s) présente une portion de paroi (27p) parallèle à la surface latérale (3s) et une portion de paroi (27w) coudée par rapport à la surface latérale (27s).

2. Doseur selon la revendication 1, dans lequel la portion de paroi parallèle (27p) est disposée dans la direction de rotation R devant la portion de paroi coudée (27w).

3. Doseur selon la revendication 1, dans lequel la portion de paroi coudée (27w) est conçue afin de minimiser la surface de contact utile entre la paroi de délimitation (19) et le doseur (3).

4. Doseur selon la revendication 1, dans lequel la portion de paroi parallèle (27p) sert à étanchéifier les éléments de transport (27) par rapport à la paroi de délimitation (19), afin de garantir un transport uniforme des semences et/ou engrais.

5. Doseur selon une des revendications précédentes, dans lequel la portion de paroi parallèle (27p) est repoussée dans une direction axiale du doseur par un espacement C par rapport à la surface latérale (3s).

6. Doseur selon une des revendications précédentes, dans lequel la portion de paroi parallèle (27p) est disposée essentiellement en alignement par rapport à la surface latérale (3s).

7. Doseur selon une des revendications précédentes, dans lequel la portion de paroi coudée (27w) présente une plus grande surface que la portion de paroi parallèle (27p).

8. Doseur selon une des revendications précédentes, dans lequel la portion de paroi coudée (27w) s'étend à un angle β>10 degrés et <802 degrés, notamment >15 degrés et <60 degrés, de préférence >20 degrés et <45 degrés, par rapport à la portion de paroi parallèle (27p).

9. Dispositif de dosage pour doser des semences et/ou engrais avec un doseur (3) selon une des revendications précédentes.

10. Epandeur pour épandre des semences et/ou engrais avec un dispositif de dosage (12) selon la revendication 9.
